# EUROPÄISCHE PATENTSCHRIFT

(11) **EP 1 915 267 B1**
(45) Veröffentlichungstag und Bekanntmachung des Hinweises auf die Patenterteilung: **17.02.2010**
(21) Anmeldenummer: 06776723.6
(22) Anmeldetag: 09.08.2006
(51) Int. Cl.: B60J 5/06

(54) **SCHIEBETÜR**
SLIDING DOOR
PORTE COULISSANTE

(30) Priorität: 11.08.2005 DE 202005012637 U; 12.09.2005 DE 202005014450 U
(43) Veröffentlichungstag der Anmeldung: 30.04.2008
(73) Patentinhaber: Brose Schliesssysteme GmbH & Co. KG, 42369 Wuppertal (DE)
(72) Erfinder: KRIESE, Olaf, 96450 Coburg (DE); FASSBENDER, Frank, 96450 Coburg (DE); GOEKE, Christof, 96103 Hallstadt (DE); KUHNEN, Thorsten, 97318 Kitzingen (DE); CRUZ, Patricia, 96049 Bamberg (DE); REITZ, Ulrich, 96279 Weidhausen (DE); OLTRAMARI, Reiner, 45549 Sprockhövel (DE); KAIB, Olaf, 40225 Düsseldorf (DE); HEINRICH, Andreas, 45579 heiligenhaus (DE); KAMBERG, Axel, 50169 Kerpen-Horrem (DE)
(74) Vertreter: Tergau & Pohl Patentanwälte
(86) Internationale Anmeldenummer: PCT/EP2006/007902
(87) Internationale Veröffentlichungsnummer: WO 2007/017278

(56) Entgegenhaltungen:
- EP-A2- 0 811 516
- DE-C2- 10 125 897
- US-A- 5 233 789

## Beschreibung

Die Erfindung betrifft eine Schiebetür, insbesondere für ein Kraftfahrzeug, mit einer vorgefertigten Systemeinheit, die eine Anzahl von Funktionsbaugruppen umfasst.

Insbesondere im Kraftfahrzeugbau ist es üblich geworden, für die Montage einer Tür zunächst einzelne Funktionsbaugruppen, wie beispielsweise einen elektrischen Fensterheber, verschiedene Stellelemente oder Audiobaugruppen, wie insbesondere einen Lautsprecher, auf einer Systemeinheit zu montieren und diese vorgefertigte Systemeinheit als Ganzes in den Rahmen der Tür einzubauen. Dies bietet den Vorteil, dass die Funktions- bzw. Qualitätskontrolle der Funktionsbaugruppen bereits vor der Endmontage der Tür, die üblicherweise bei der Fahrzeugmontage erfolgt, vorzunehmen. Zudem kann die Montagezeit bei der Fahrzeugmontage erheblich verkürzt werden, da nicht eine Vielzahl einzelner Funktionsbaugruppen sondern lediglich eine einzige, diese Funktionsbaugruppen tragende Systemeinheit eingesetzt werden muss. Anstelle des im Folgenden verwendeten Begriffs einer Systemeinheit spricht man auch von einem so genannten Türmodul.

Schiebetüren werden seit langem für Lieferwagen und Kleintransporter, in jüngerer Zeit zunehmend auch für Personenwagen eingesetzt. Allen Schiebetüren ist gemeinsam, dass sie durch eine Schiebebewegung in eine geöffnete Stellung und in eine geschlossene Stellung verstellbar sind. Diese Schiebebewegung erfolgt im Wesentlichen parallel zur Seitenwand des Fahrzeugs. Besonders vorteilhaft ist dabei die Tatsache, dass ein ungestörtes Be- und Entladen bzw. ein Ein- und Aussteigen möglich ist.

Schiebetüren sind zunehmend zur motorischen Verstellung ausgestattet. Eine derartige Schiebetür ist beispielsweise aus der DE 101 25 897 C2) bekannt. Diese Schiebetür weist einen an der Schiebetür angeordneten Rollenwagen mit einer Laufrollenanordnung auf, wobei die Schiebetür über die Laufrollenanordnung in einer korrespondierenden Führungsschiene an der Karosserie des Kraftfahrzeugs geführt ist.

Aufgabe der Erfindung ist es, für eine Schiebetür die Endmontage weiter zu vereinfachen. Diese Aufgabe wird für eine Schiebetür der eingangs genannten Art erfindungsgemäß dadurch gelöst, dass auf der Systemeinheit als eine Funktionsbaugruppe ein Schiebetürantrieb angeordnet ist, der einen Antriebsmotor und ein vom Antriebsmotor angetriebenes Koppelelement umfasst, welches zu einer lösbaren Kopplung mit einer externen Verstellmechanik ausgebildet ist.

Die Erfindung geht dabei von der Überlegung aus, dass ein wesentlicher Schritt in der Montage einer Schiebetür deren Ankopplung an die karosserieseitig gelegene Schiebetürmechanik darstellt. Weist die Schiebetür einen Schiebetürantrieb auf, so erschwert sich diese Montage weiter durch die Ankopplung der Antriebselemente. Zudem ist der Antriebsmotor in einem zusätzlichen Montageschritt auf der Karosserie zu montieren. Die Montage einer Schiebetür mit Schiebetürantrieb lässt sich jedoch vereinfachen, wenn die karosserieseitige Verstell- bzw. Schiebemechanik vom Schiebetürantrieb entkoppelt wird. Wird der Schiebetürantrieb als eine Funktionsbaugruppe auf der vorgefertigten Systemeinheit montiert, so verbleibt bei der Endmontage der Schiebetür lediglich deren mechanische Kopplung zur Karosserie und eine Ankopplung des Schiebetürantriebs an die Schiebemechanik. Hierzu umfasst der Schiebetürantrieb einen Antriebsmotor und ein vom Antriebsmotor getriebenes Koppelelement zur Kopplung mit einer externen Schiebemechanik.

Die Erfindung bietet den Vorteil, dass der Schiebetürantrieb als solcher vor der Endmontage bereits auf Funktionsfähigkeit und Qualität überprüft werden kann. Weiter wird durch die Integration des Schiebetürantriebs auf der Systemeinheit die Endmontage der Schiebetür wesentlich vereinfacht, was zur Erhöhung der Produktionsgeschwindigkeit beiträgt.

Durch Verwendung einer Abtriebswelle kann der Antriebsmotor vorteilhafterweise entfernt von der anzutreibenden Schiebemechanik angeordnet werden. Damit kann für den Antriebsmotor günstiger Bauraum in der Systemeinheit genutzt werden. Dies ist von Vorteil, da für die Anordnung der einzelnen Funktionsbaugruppen auf der Systemeinheit nur begrenzt Platz zur Verfügung steht. Die einzelnen Funktionsbaugruppen müssen daher möglichst Raum sparend und dicht in der Systemeinheit angeordnet werden.

Zweckmäßigerweise umfasst das Koppelelement eine Getriebemechanik. Mittels einer solchen Getriebemechanik kann die Bewegung der Abtriebswelle in die entsprechend zum Antrieb der Schiebemechanik benötigte Bewegung umgesetzt werden. Durch die am Koppelelement angeordnete Getriebemechanik kann zudem die Drehachse der Abtriebswelle in eine für den Antrieb der Schiebemechanik notwendig anders ausgerichtete Drehachse umgesetzt werden. Dadurch ergibt sich ein größerer Spielraum in der Führung der Abtriebswelle und damit der Lage des Antriebsmotors.

Als Koppelglied des Koppelelements ist grundsätzlich jedweder Form- oder Kraftschluss vorstellbar. So kann die Kopplung mittels Zahnrädern, Antriebswellen oder Antriebsriemen hergestellt werden. Für die Montage besonders günstig ist es jedoch, das Koppelglied als eine Profilwelle auszugestalten. Diese braucht bei der Endmontage lediglich in ein entsprechend ausgebildetes Gegenstück eingeführt zu werden, wodurch die Kopplung dann durch Formschluss hergestellt ist. Die Ausbildung als positive Profilwelle, die zur Herstellung des Formschlusses in eine negative Gegenform eingeführt werden muss, ist insbesondere deshalb günstig, weil die Schiebetür als solche bei der Endmontage gegenüber der Karosserie das bewegliche Teil darstellt.

In einer weiteren vorteilhaften Ausgestaltung der Erfindung umfasst der Schiebetürantrieb eine insbesondere auf der Trockenseite angeordnete Steuereinheit. Die Anordnung einer Steuereinheit zur Ansteuerung des Schiebetürantriebs auf der Systemeinheit ermöglicht eine weitere Verkürzung bei der Endmontage der Schiebetür. Auch die Kontrolle der Funktionsfähigkeit kann mit den bereits geschilderten Vorteilen vorab erfolgen. Da die Steuereinheit elektronische Bauteile umfasst, die in der Regel gegenüber Feuchtigkeit zu schützen sind, empfiehlt es sich, die Steuereinheit auf der Trockenseite der Schiebetür anzuordnen. Dabei unterscheidet man im Falle einer Kraftfahrzeugtür prinzipiell zwischen einer Trocken- und einer Nassseite. Die Nassseite ist die später außen am Kraftfahrzeug liegende Seite der Tür, die beispielsweise durch an der Außenscheibe herabrinnendes Wasser mit Feuchtigkeit beaufschlagt werden kann. Die Trockenseite dagegen ist die innenliegende Seite einer Kraftfahrzeugtür, die vor eindringender Feuchtigkeit geschützt ist. Zwischen Nass- und Trockenseite ist eine Feuchtigkeitsbarriere eingebaut, die beispielsweise durch die Wand der Systemeinheit gebildet werden kann.

In einer weiteren vorteilhaften Ausgestaltung der Erfindung ist das Koppelelement auf der Nassseite und der Antriebsmotor auf der Trockenseite angeordnet, wobei die Abtriebswelle flexibel ausgestaltet ist und von der Trockenseite über eine abgedichtete Durchführung auf die Nassseite geführt ist. Durch diese Anordnung ist zum einen eine einfache Montage gewährleistet und zum anderen der Antriebsmotor selbst nicht vor Feuchtigkeit zu schützen. Der Aufwand zum Schutz der empfindlichen Bauelemente reduziert sich auf eine einzige Durchführung, durch die die Abtriebswelle hindurchtritt.

Zweckmäßigerweise ist das Koppelelement auf einem insbesondere schiebebeweglichen Haltewinkel aus einem elastisch biegbaren Material montiert. Auf diese Art und Weise kann bei der Endmontage der Schiebetür das Koppelelement innerhalb gewisser Grenzen bewegt werden, so dass die Kopplung mit der Schiebemechanik rasch und einfach hergestellt werden kann. Ebenso werden hierdurch Fertigungstoleranzen des Schiebetürrohbaus sowie des Türmoduls ausgeglichen.

Als ein derartiger schiebebeweglicher Haltewinkel eignet sich beispielsweise ein auf Langlöchern montiertes Teilstück aus einem stabilen elastischen Kunststoff, der durch eine entsprechende Winkelgestaltung zumindest in zwei Richtungen verkippbar ist. Ein derartiger Haltewinkel wird bereits für die Montage des Türschlosses verwendet, so dass es insbesondere vorteilhaft ist, wenn der für das Koppelelement verwendete Haltewinkel ein Schlosshaltewinkel ist. Hierdurch wird in günstiger Art und Weise auf bereits bekannte Konstruktionsprinzipien zurückgegriffen, die wiederum die Endmontage der Schiebetür erleichtern.

Von Vorteil ist es hierbei weiter, wenn auf dem Haltewinkel eine weitere Baugruppe, insbesondere eine Nassraumsteckverbindung oder eine Kabelführung, montiert ist.

Bei der eingangs erwähnten, bekannten Schiebetür führt der Antriebsstrang der Antriebsanordnung über ein Antriebsseil, das zwei Antriebsseilstränge aufweist. Die Enden der Antriebsseilstränge sind jeweils mit der Karosserie des Kraftfahrzeugs verbunden, wobei die Antriebsanordnung in der Schiebetür einen Antrieb und eine mit dem Antrieb gekoppelte Seiltrommel zur Übertragung von Antriebskraft auf das Antriebsseil aufweist. Die Antriebsanordnung zieht die Schiebetür gewissermaßen an dem mit der Karosserie des Kraftfahrzeugs verbundenen Seil entlang.

Die Seiltrommel ist in einiger Entfernung vom Rollenwagen derart angeordnet, dass die Seilführung eine aufwändige Umlenkanordnung aufweisen muss. Dies ist nicht nur kostenaufwändig, sondern führt bei der Montage sowie bei einer gegebenenfalls durchzuführenden Reparatur zu einem hohen Aufwand.

Durch die vorteilhafte Ausgestaltung der Schiebetür mit einer angebundenen Verstellmechanik, umfassend einen Rollenwagen mit einer Laufrollenanordnung zur Führung der Schiebetür in einer Führungsschiene an der Karosserie des Kraftfahrzeugs und mit einer über das Koppelelement vom Antriebsmotor antreibbaren Antriebsanordnung zur motorischen Verstellung der Schiebetür, wobei der Antriebsstrang der Antriebsanordnung über ein Antriebsseil führt, wobei jedenfalls ein Ende des Antriebsseils mit der Karosserie des Kraftfahrzeugs verbunden ist und wobei die Antriebsanordnung in der Schiebetür eine mit dem Antriebsmotor über das Koppelelement gekoppelte Seiltrommel zur Übertragung von Antriebskraft auf das Antriebsseil aufweist, und wobei die Seiltrommel der Antriebsanordnung am oder im Rollenwagen angeordnet ist, wird mit einfachen konstruktiven Mitteln der Aufwand für die Montage und für gegebenenfalls durchzuführende Reparaturen reduziert.

Diese Lösung ist auch eigenständig, d.h. ohne die Merkmale des Anspruchs 1, vom Stand der Technik unterschieden. Hierdurch wird alleine die Aufgabe gelöst, den Aufwand bei der Montage oder bei durchzuführenden Reparaturen zu reduzieren.

Durch eine geeignete Positionierung der Seiltrommel kann eine besonders einfache Ausgestaltung insbesondere im Hinblick auf die Seilführung erzielt werden. Durch die Anordnung der Seiltrommel am oder im Rollenwagen kann die für die Führung des Antriebsseils erforderliche Umlenkung auf ein Minimum reduziert werden. Hierdurch reduziert sich nicht nur der konstruktive Aufwand, sondern auch der Aufwand für die Montage oder für eine gegebenenfalls durchzuführende Reparatur.

Besonders vorteilhaft ist die Schiebetür, bei der von der Seiltrommel zwei Antriebsseilstränge abgehen, die jeweils mit dem vorderen Abschnitt bzw. mit dem hinteren Abschnitt der Karosserie des Kraftfahrzeugs verbunden sind. Dabei kann es sein, dass es sich bei dem Antriebsseil um ein einziges Seilstück handelt, das über einige Windungen reibschlüssig mit der Seiltrommel gekoppelt ist. Es kann aber auch sein, dass das Antriebsseil zwei einzelne Seilabschnitte aufweist, die an einem Ende jeweils fest mit der Seiltrommel verbunden sind. In jedem Fall ist es so, dass sich die Schiebetür mit dem Antriebsseil gewissermaßen entlang zieht.

Weiter ist es vorteilhaft, wenn die Drehachse der Seiltrommel, vorzugsweise auch die Umlenkrollen der Umlenkvorrichtung, im Wesentlichen vertikal ausgerichtet sind. Bei einer derartigen Ausgestaltung genügt eine zweifache Umlenkung des Antriebsseils, um die Funktion der Antriebsanordnung sicherzustellen.

Weiter besonders bevorzugten Ausgestaltungen betreffen eine besondere Form des Gehäuses des Rollenwagens. Ist das Gehäuse im wesentlichen geschlossen, so stellt dies eine Ausgestaltung dar, die besonders unempfindlich gegen ungünstige Umwelteinflüsse wie Schmutz und Feuchtigkeit ist. Die anderen Ausgestaltungen des Gehäuses führen zu einer ganz besonders kompakten Realisierung.

Eine formschlüssige Kopplung ist im Hinblick auf die Montage und im Hinblick auf eine gegebenenfalls durchzuführende Reparatur besonders vorteilhaft. Durch die Ausgestaltung der Antriebsschnittstelle als lösbare Schnittstelle können der Antrieb einerseits und der Rollenwagen andererseits weitgehend unabhängig voneinander demontiert bzw. ausgetauscht werden. Außerdem ist es hiermit ohne weiteres möglich, eine besonders preiswerte, manuell betätigbare Schiebetür zu realisieren, indem man schlichtweg auf die Montage des Antriebs und des Antriebsseils verzichtet.

Nach einer weiteren Lehre, der eigenständige Bedeutung zukommt, wird eine Schiebetürkinematik angegeben. Diese Schiebetürkinematik löst auch eigenständig, d.h. ohne die Merkmale des Anspruches 1, das Problem, den Aufwand für die Montage und für durchzuführende Reparaturen zu reduzieren.

Als Schiebetürkinematik wird vorliegend ein Mechanismus verstanden, der die Verschiebbarkeit, hier die motorische Verschiebbarkeit, einer Schiebetür gewährleistet. Die wesentlichen Komponenten dieser Schiebetürkinematik sind der Rollenwagen einerseits und die Antriebsanordnung andererseits. Zu diese Komponenten wird auf die bisherigen diesbezüglichen Ausführungen verwiesen.

Weitere Einzelheiten, Merkmale und Vorteile der vorliegenden Erfindung werden nachfolgend anhand einer Zeichnung mit bevorzugten Ausführungsbeispielen näher erläutert. Dabei zeigen:
- Fig. 1: die teilweise geöffnete Innenseite einer zur Montage auf einer Füh- rungsschiene vorgesehenen Schiebetür mit einer Systemeinheit, auf der ein Schiebetürantrieb angeordnet ist,
- Fig. 2: eine Schiebemechanik zum Antrieb einer Schiebetür in einer Füh- rungsschiene,
- Fig. 3: die Schiebemechanik gemäß Fig. 2 in teilweise geöffneter Darstellung,
- Fig. 4: in einer Aufsicht eine Systemeinheit mit Schiebetürantrieb vor ihrer Montage in eine Schiebetür,
- Fig. 5: in schematischer Darstellung ein Kraftfahrzeug mit einer Schiebetür,
- Fig. 6: in schematischer Darstellung den mit der Führungsschiene in Eingriff befindlichen Rollenwagen inklusive Antriebsanordnung der Schiebetür gemäß Fig. 5,
- Fig. 7: eine Explosionsdarstellung der Komponenten Schiebetür, Rollenwagen und Führungsschiene gemäß Fig. 5,
- Fig. 8: einen Antrieb der Antriebsanordnung der Schiebetür gemäß Fig. 7 im eingebauten Zustand,
- Fig. 9: eine Explosionsdarstellung des Rollenwagens gemäß Fig. 7,
- Fig. 10: eine Seitenansicht des Rollenwagens gemäß Fig. 7 im Schnitt und
- Fig. 11: einen Rollenwagen einer Schiebetür gemäß einem zweiten Ausführungsbeispiel.

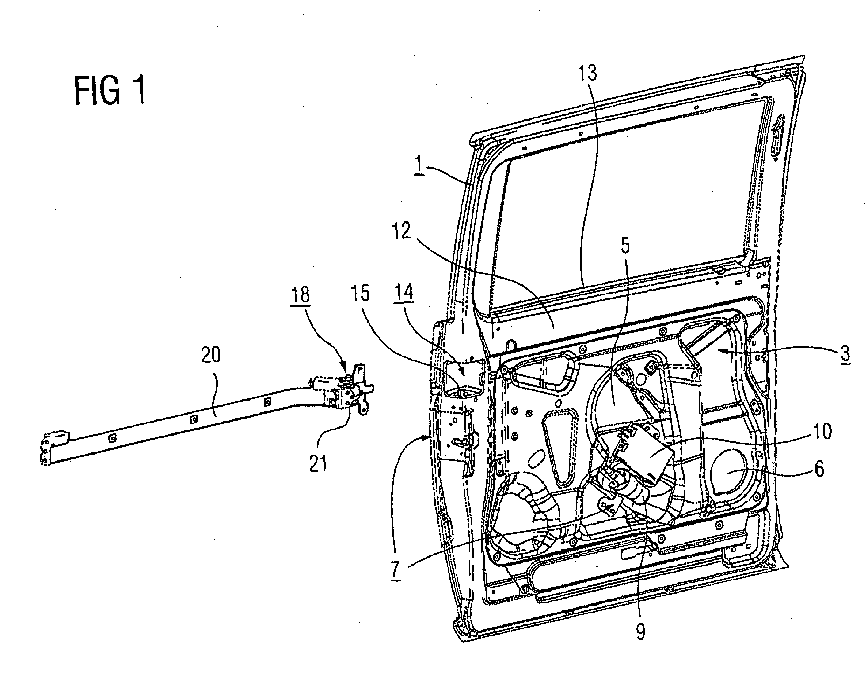

In Fig. 1 ist die teilweise geöffnete Innenseite einer Schiebetür 1 eines Kraftfahrzeuges dargestellt. Auf den Rahmen der Schiebetür 1 ist eine vorgefertigte Systemeinheit 3 montiert, die eine Reihe von hier aus Gründen der Übersichtlichkeit nicht dargestellten Funktionsbaugruppen trägt. Man erkennt jedoch beispielsweise den Montageplatz 5 eines Antriebs für einen Fensterheber und den Montageplatz 6 für den Einsatz eines Lautsprechers. Als eine Funktionsbaugruppe ist auf der Systemeinheit ein Schiebetürantrieb 7 angeordnet bzw. vormontiert, der einen Antriebsmotor 9 und eine Steuereinheit 10 umfasst. Sowohl der Antriebsmotor 9 als auch die Steuereinheit 10 sind dabei auf Trockenseite 12 der Schiebetür 1 angeordnet. Weiter umfasst der Schiebetürantrieb 7 ein auf der Nassseite 13 angeordnetes Koppelelement 14, von dem nur das als in Form einer Profilwelle (Achtkant) ausgebildete Koppelglied 15 zu erkennen ist. Das Koppelelement 14 ist auf der Nassseite 13 über eine nicht sichtbare Abtriebswelle mit dem Antriebsmotor 9 verbunden. Die Trennung zwischen der Trockenseite 12 und der Nassseite 13 erfolgt durch die Wandung der Systemeinheit 3 als solcher.

Zur Montage der Schiebetür 1 auf der Karosserie eines Kraftfahrzeugs wird diese auf einer Schiebemechanik 18 befestigt, die beweglich auf einer Führungsschiene 20 angeordnet ist. Die Führungsschiene 20 ist dabei an der Karosserie des Kraftfahrzeugs befestigt. Die Schiebemechanik 18 umfasst ein Hohlelement 21, in welches bei Montage der Schiebetür 1 das Koppelglied 15 eingreift. Wird das Koppelglied 15 mittels des Antriebsmotors 9 in eine Drehbewegung versetzt so wird diese in eine Bewegung der Schiebemechanik 18 entlang der Führungsschiene 20 umgesetzt. Die Schiebetür 1 bewegt sich durch den Antriebsmotor 9 angetrieben entlang der Führungsschiene 20.

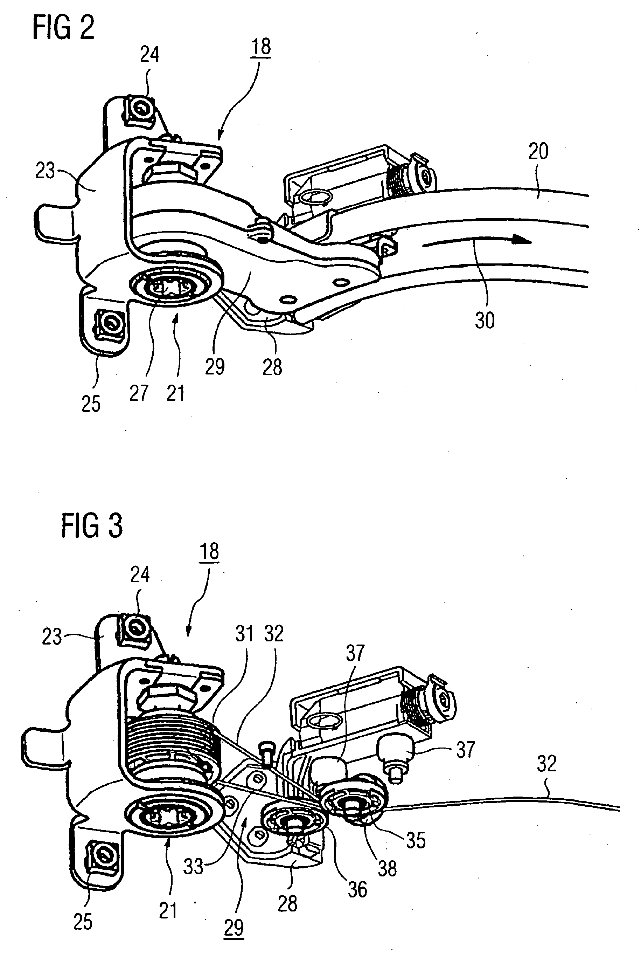

Zur Verdeutlichung des Antriebsmechanismus ist in Fig. 2 und 3 die in Fig. 1 dargestellte Schiebemechanik 18 detaillierter dargestellt. Fig. 2 zeigt hierzu eine perspektivische Darstellung der geschlossenen Schiebemechanik 18, während in Fig. 3 einige Gehäuseteile entfernt sind.

Gemäß Fig. 2 weist die Schiebemechanik 18 ein Halteelement 23 auf, an welchem mittels der Bohrungen 24 und 25 die Schiebetür befestigt wird. In dem Halteelement 23 ist eine Mechanik drehbar gelagert, die als Hohlelement 21 einen Innenachtkant 27 aufweist, in welchen das in Fig. 1 gezeigte Koppelglied 15 des Schiebetürantriebs 7 eingreift.

Die Schiebemechanik 18 insgesamt läuft mittels einer aus Fig. 3 erkennbaren Rollenmechanik 29 in Richtung des Pfeils 30 entlang der Führungsschiene 20, die über einen Befestigungswinkel 28 an der Karosserie des Kraftfahrzeugs befestigt ist

Durch Entfernung einiger Gehäuseteile ist die Rollenmechanik 29 der Schiebemechanik 18 in Fig. 3 deutlich erkennbar. Die Rollenmechanik 29 umfasst insgesamt einen über das Hohlelement 21 antreibbaren Seilzug 31, auf welchen mit entgegengesetzter Wicklungsrichtung ein erstes Seil 32 und ein zweites Seil 33 aufgewickelt sind. Je nach Drehrichtung des Seilzugs 31 wird dann entweder das erste Seil 32 aufgewickelt, während das zweite Seil 33 abgewickelt wird, oder umgekehrt. Wird beispielsweise das erste Seil 32 aufgewickelt, so bewegt sich aufgrund der Verkürzung des ersten Seiles 32 die Schiebemechanik 18 gemäß Fig. 3 zur rechten Blattseite hin. Gleichzeitig wird dabei das zweite Seil 33 abgewickelt. Die Schiebetür bewegt sich insgesamt zur rechten Blattseite hin.

Zur Führung der Schiebemechanik 18 in der Fig. 2 entnehmbaren Führungsschiene 20 sind eine erste Rolle 35 und eine zweite Rolle 36 vorgesehen, über welche das erste Seil 32 bzw. das zweite Seil 33 abgewickelt wird. Weiter sind Rollen 37 und eine Stützrolle 38 vorgesehen, die die Schiebemechanik 18 in einem entsprechend ausgebildeten Profil entlang der Führungsschiene 20 halten.

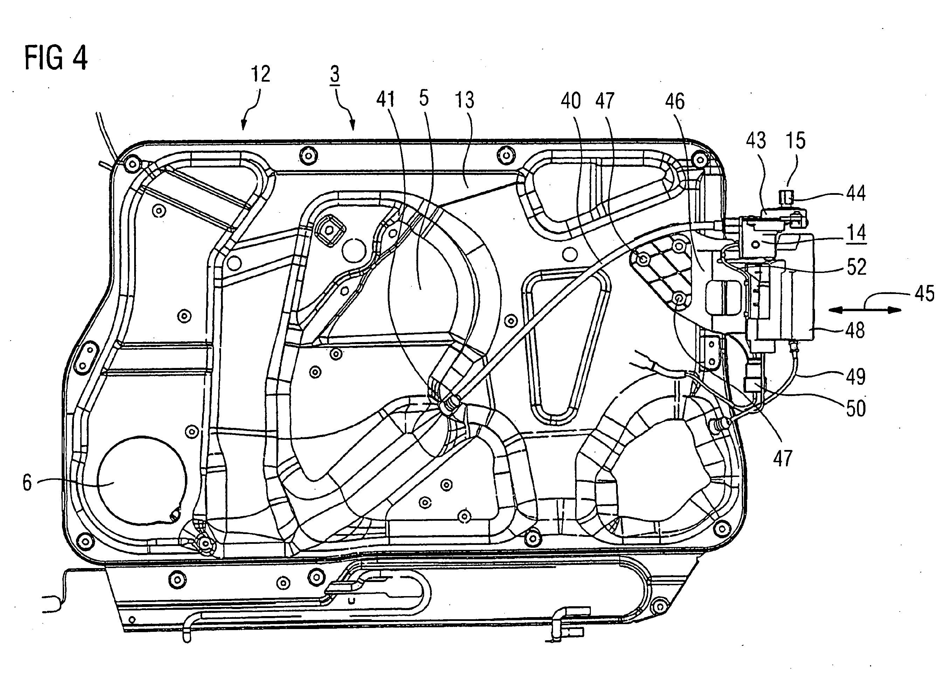

Fig. 4 zeigt in einer Aufsicht eine Systemeinheit 3, wie sie zur Montage in eine Schiebetür 1 gemäß Fig. 1 vorgesehen ist. Wiederum sind aus Gründen der Übersichtlichkeit im Realen bereits vormontierte Funktionsbaugruppen nicht eingezeichnet. Die Montageplätze 5 und 6 für den Antrieb eines Fensterhebers bzw. für einen Lautsprecher sind jedoch wieder erkennbar. In Fig. 4 ist die Systemeinheit 3 von der Nassseite 13 betrachtet dargestellt. Man erkennt nun, dass ausgehend von dem nicht sichtbaren Antriebsmotor die Abtriebswelle 40 von der Trockenseite 12 kommend über eine Durchführung 41 auf die Nassseite 13 geführt ist. Zur Trennung zwischen Trockenseite 12 und Nassseite 13 ist die Durchführung 41 mit einer wasserdichten Abdichtung ausgeführt. Die Abtriebswelle 40 ist mit dem Koppelelement 14 verbunden, welches eine Getriebemechanik 43 umfasst, die die Drehbewegung der Abtriebswelle 40 in eine Drehbewegung des Koppelglieds 15 umsetzt, welches in Form eines Achtkants 44 ausgebildet ist.

Das Koppelelement 14 insgesamt ist auf einem Schlosshaltewinkel 46 befestigt, der aus einem elastisch biegbaren Kunststoffmaterial gefertigt ist. Mittels der jeweils in einem Langloch befestigten Schrauben 47 ist der Schlosshaltewinkel 46 insgesamt in Richtung der Pfeile 45 verschiebbar. Aufgrund des elastischen Materials und einer nicht sichtbaren Faltung senkrecht zur Plattebene ist das montierte Koppelelement zudem in Blattebene senkrecht zu den Pfeilen 45 und senkrecht zur Blattebene biegebeweglich.

Der eingezeichnete Schlosshaltewinkel 46 ist vorgesehen, um die Montage des ebenfalls auf ihm angeordneten Schlosses 48 in der Schiebetür zu erleichtern. Durch den Schlosshaltewinkel 46 kann das Schloss 48 mit einer größeren Flexibilität in der Schiebetür an die zur Montage vorgesehene Position gebracht werden. Gleiches gilt natürlich für den Fall, dass das Koppelelement 14 auf dem Schlosshaltewinkel 46 angeordnet ist, auch für dieses.

Für eine Zuziehhilfe weist das Schloss 48 weiter eine Zuleitung 49 auf. Weiter ist auf dem Schlosshaltewinkel 46 eine Nassraumsteckverbindung 50 angeordnet, über die beispielsweise mittels eines Sensors auf die Stellung der Getriebemechanik 43 zurückgegriffen werden kann. Weiter können auf dem Schlosshaltewinkel 46 Sensoren zur Erfassung der Stellung, der Bewegung oder der Beschleunigung der Schiebetür 1 angeordnet sein. Hierzu ist auf dem Schlosshaltewinkel 46 eine entsprechende Kabelführung 52 vorgesehen.

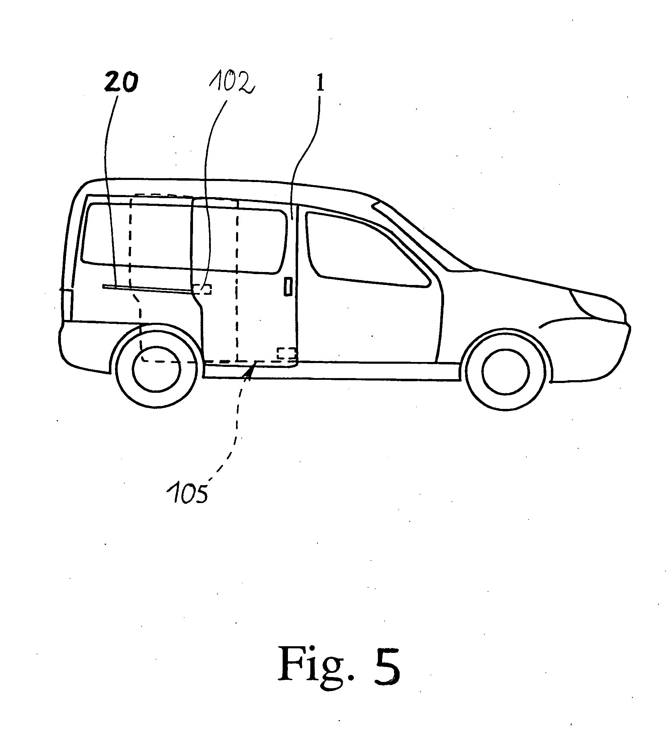

In der Zeichnung zeigt Fig. 5 ein Kraftfahrzeug mit einer Schiebetüranordnung, die seitlich des Kraftfahrzeugs angeordnet ist. Gleichermaßen ist es auch denkbar, dass sich die Schiebetüranordnung an der Rückseite des Kraftfahrzeugs befindet.

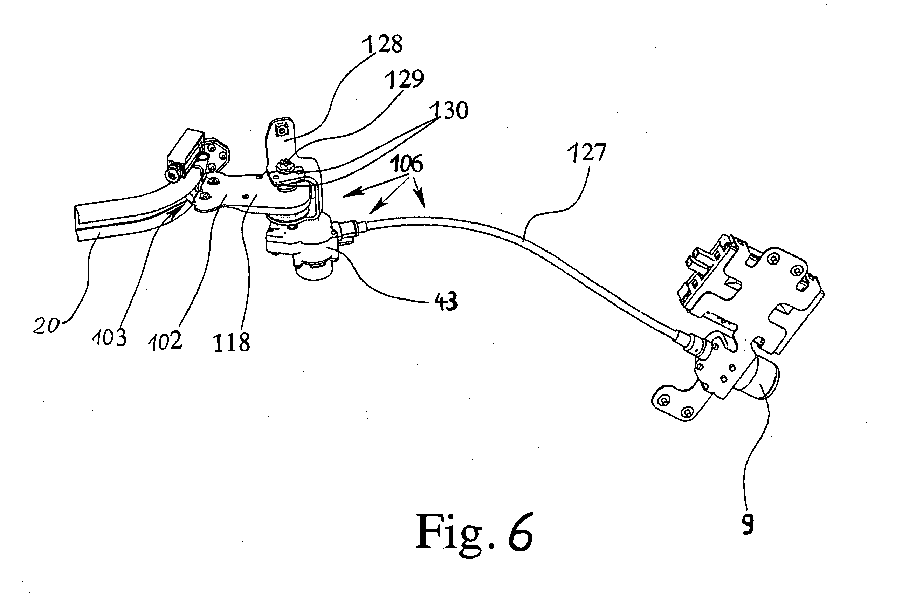

Die Schiebetüranordnung weist eine Schiebetür 1 auf, die durch eine Schiebebewegung in eine geöffnete Stellung (in Fig. 5 in gestrichelter Linie dargestellt) und in eine geschlossene Stellung (in Fig. 5 in durchgezogener Linie dargestellt) verstellbar ist. Dabei ist ein an der Schiebetür 1 angeordneter Rollenwagen 102 vorgesehen. Als Teil der Rollenemechanik ist eine Laufrollenanordnung 103 umfasst, die beispielsweise in Fig. 6 zu erkennen ist. Die Schiebetür 1 ist über die Laufrollenanordnung 103 in einer Führungsschiene 20 an der Karosserie des Kraftfahrzeugs geführt. Im dargestellten und insoweit bevorzugten Ausführungsbeispiel ist ein Rollenwagen 102 im mittleren Türbereich angeordnet, wobei die Schiebetür 1 in ihrem unteren Bereich durch eine weitere Führungsschiene 105 mit einem korrespondierenden, nicht weiter dargestellten Rollenwagen geführt ist. Grundsätzlich kann zusätzlich oder alternativ zu der unteren Führung auch eine obere Führung vorgesehen sein. Wesentlich ist vorliegend lediglich die Tatsache, dass zumindest ein Rollenwagen 102 mit einer Laufrollenanordnung 103 vorgesehen ist, der zu einer entsprechenden Führungsschiene 20 korrespondiert.

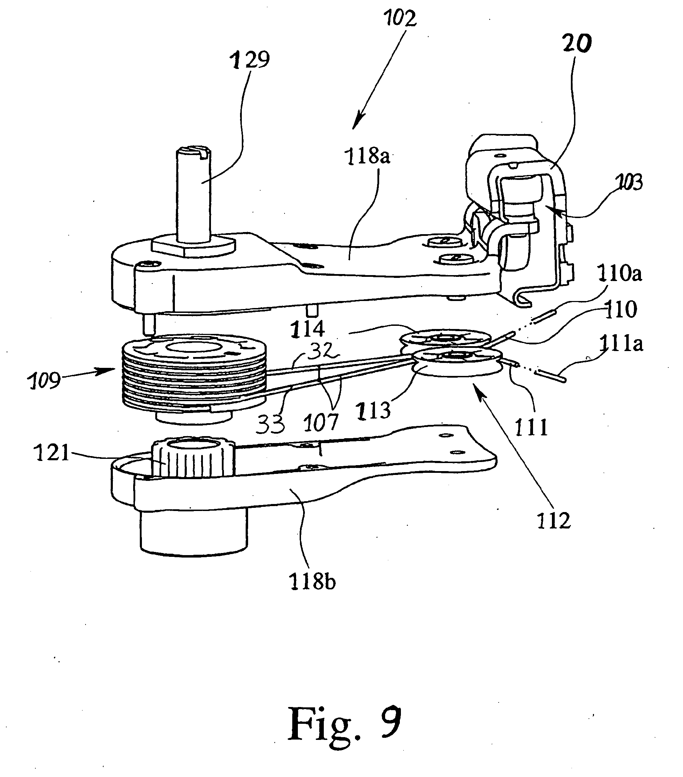

Es lässt sich der Darstellung gemäß Fig. 9 entnehmen, dass der Rollenwagen 102 vorliegend als vormontierbare Einheit ausgestaltet ist. Dies bedeutet, dass bei der Endmontage der Schiebetür 1 der vormontierte Rollenwagen 102 im Wesentlichen nur noch eingesetzt und befestigt werden muss. Eine weitere Montage von Einzelteilen des Rollenwagens 102 ist bei der Endmontage in der Regel nicht mehr erforderlich.

Es ist ferner eine Antriebsanordnung 106 (Fig. 6) zur motorischen Verstellung der Schiebetür 1 in die geöffnete Stellung und in die geschlossene Stellung vorgesehen. Dabei führt der Antriebsstrang der Antriebsanordnung 106 über ein Antriebsseil 107 mit dem ersten Seil 32 und dem zweiten Seil 33 (siehe Fig. 9). Dies bedeutet, dass die Antriebskraft für die Öffnungsbewegung und die Schließbewegung über ein Antriebsseil 107 übertragen wird. Dabei ist jedenfalls ein Ende des Antriebsseils 107 mit der Karosserie des Kraftfahrzeugs verbunden. Unter dem Begriff "Antriebsseil" sind vorliegend alle Arten von flexiblen Zugmitteln zusammengefasst. Es kann sich bei dem Antriebsseil also auch um einen Antriebsriemen oder dergleichen handeln.

Die Antriebsanordnung 106 ist mit einem Koppelelement 14 und mit einer mit dem Koppelelement 14 gekoppelten Seiltrommel 109, die wiederum Teil der Rollenmechanik ist, zur Übertragung von Antriebskraft auf das Antriebsseil 107 ausgestattet. Als Antriebsmotor 9 wird vorzugsweise ein Elektromotor eingesetzt. Grundsätzlich können aber auch andere bekannte Antriebsvarianten eingesetzt werden.

In bevorzugter Ausgestaltung ist die Seiltrommel 109 der Antriebsanordnung 106 im Rollenwagen 102 angeordnet. Der hieraus resultierende Vorteil der besonders einfachen Seilführung lässt sich der Darstellung gemäß Fig. 9 unmittelbar entnehmen.

Wesentlich ist für das Erreichen der oben genannten, besonders einfachen Seilführung, dass die Seiltrommel 109 dem Rollenwagen 102 zugeordnet ist. Dabei kann es beispielsweise auch vorgesehen sein, dass die Seiltrommel 109 am Rollenwagen 102, beispielsweise auf dem Rollenwagen 102 angeordnet ist. Hierfür sind eine Reihe von vorteilhaften Varianten denkbar.

In besonders bevorzugter Ausgestaltung gehen von der Seiltrommel 109 zwei Antriebsseilstränge 110,111 ab, wobei das Ende 110a des einen Antriebsseilstranges 110 mit einem vorderen Abschnitt der Karosserie des Kraftfahrzeugs verbunden ist und wobei das Ende 111a des anderen Antriebsseilstrangs 111 mit einem hinteren Abschnitt der Karosserie des Kraftfahrzeugs verbunden ist.

Der Antriebsmechanismus basiert auf der schon angesprochenen Überlegung, dass sich die Schiebetür 1 mit der Antriebsanordnung 106 am Antriebsseil 107 entlang zieht.

Um eine optimale Führung des Antriebsseils 107 zu gewährleisten, ist als Teil der Rollenmechanik eine Umlenkvorrichtung 112 für die von der Seiltrommel 109 abgehenden Antriebsseilstränge 110,111 vorgesehen. Die Umlenkvorrichtung 112 gewährleistet eine Positionierung der Antriebsseilstränge 110,111 im Wesentlichen innerhalb der Führungsschiene 20, wobei die Umlenkvorrichtung 112 im Rollenwagen 102 angeordnet ist. Die Positionierung der Antriebsseilstränge 110,111 innerhalb der Führungsschiene 20 ist besonders vorteilhaft, da die Antriebsseilstränge 110,111 für den Benutzer nicht sichtbar bzw. erreichbar sind. Je nach Anwendungsfall kann es aber auch vorteilhaft sein, die Antriebsseilstränge 110,111 in unmittelbarer Nähe der Führungsschiene 20, beispielsweise in einem zusätzlichen Kanal oder dergleichen, zu positionieren. Ferner kann die Umlenkvorrichtung 112 auch am Rollenwagen 102, beispielsweise auf dem Rollenwagen 102, angeordnet sein.

Für die Ausgestaltung der Umlenkvorrichtung 112 sind eine Reihe von vorteilhaften Möglichkeiten denkbar. Eine bevorzugte und in Fig. 9 dargestellte Variante besteht darin, dass die Umlenkvorrichtung 112 für die beiden Antriebsseilstränge 110,111 jeweils eine am Rollenwagen 102 gelagerte Umlenkrolle 113,114 (entsprechend den Rollen 35, 36 gem. Fig. 3) aufweist. Hier ist es wiederum so, dass die Umlenkrollen 113,114 im Rollenwagen 102 angeordnet sind, was die Schmutzempfindlichkeit erheblich reduziert.

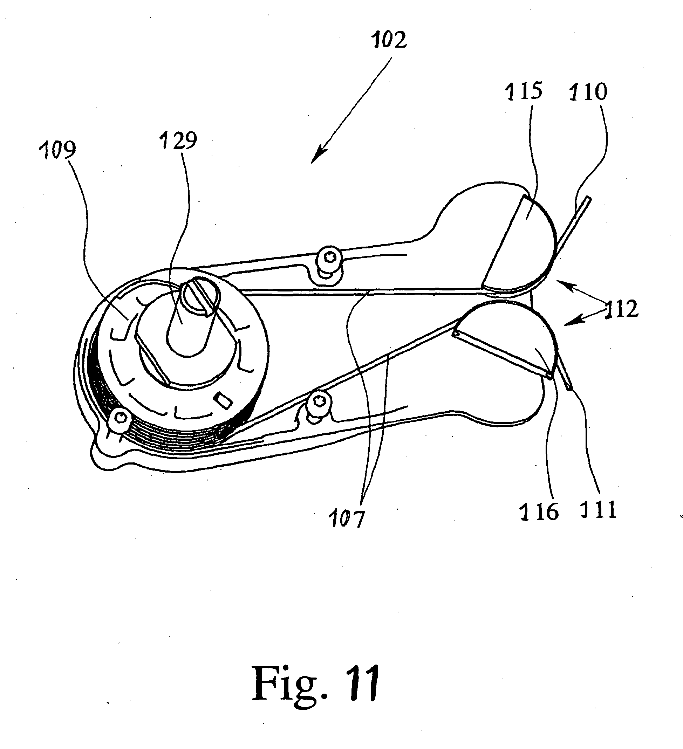

Eine andere bevorzugte Variante der Ausgestaltung der Umlenkvorrichtung 112, die besonders kostengünstig ist, besteht darin, dass für die beiden Antriebsseilstränge 110,111 jeweils eine Umlenkkontur 115,116 vorgesehen ist, die integraler Bestandteil des Rollenwagens 102 ist (Fig. 11). Beispielsweise könnte eine derartige Umlenkkontur in einem Gussteil oder dergleichen des Rollenwagens 102 vorgesehen sein.

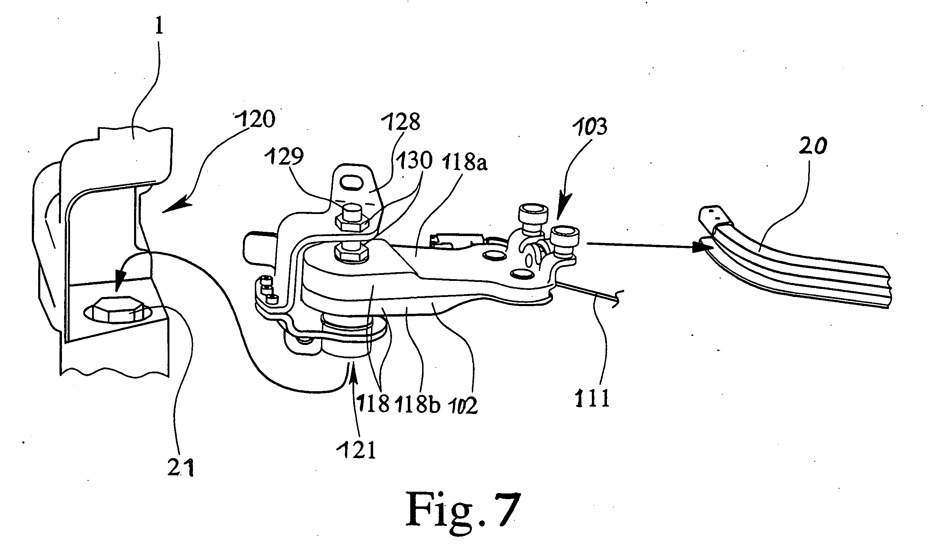

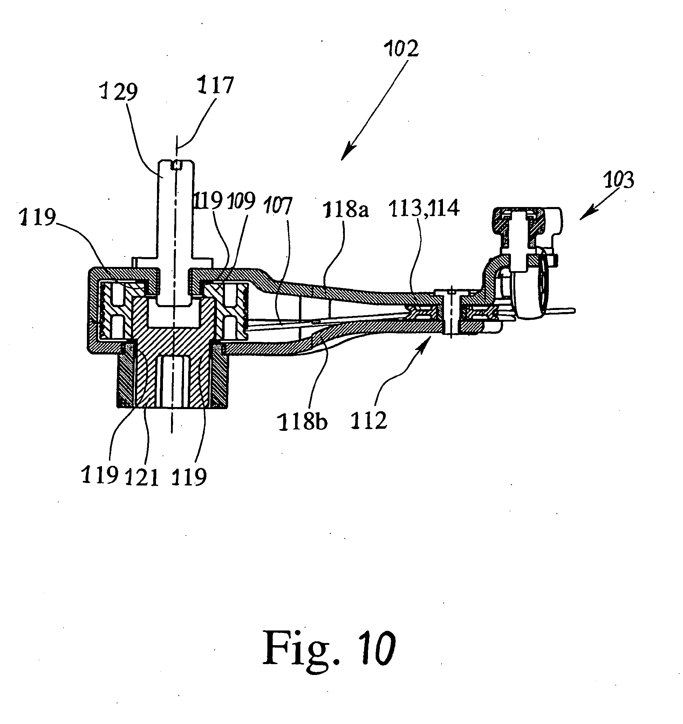

Zu einer besonders kompakten Ausgestaltung führt die Anordnung der Seiltrommel 109 derart, dass die Drehachse 117 (Fig. 10) der Seiltrommel 109 im Wesentlichen vertikal ausgerichtet ist (Fig. 7,10). Im Sinne einer besonders einfachen Seilführung ist es dann vorzugsweise vorgesehen, dass die Umlenkrollen 113,114 der Umlenkvorrichtung 112 ebenfalls im Wesentlichen vertikal ausgerichtet sind. Es ist Fig. 9 zu entnehmen, dass eine zusätzliche Umlenkung, die über die Umlenkung durch die beiden Umlenkrollen 113,114 hinausgeht, nicht vorgesehen ist, was grundsätzlich den Vorteil einer geringen Bauteilanzahl und damit geringer Kosten, sowie den Vorteil eines geringen Bauraums sowie geringen Gewichts mit sich bringt. Ferner ist mit der Reduzierung der Bauteilanzahl auch eine einfache und schnelle Montage sowie eine schnelle Austauschbarkeit der Komponenten verbunden.

Bei den dargestellten Ausführungsbeispielen ist der die Rollenmechanik umfassende Rollenwagen 102 mit einem zweigeteilten Gehäuse 118 ausgestattet, das ein Gehäuseoberteil 118a und ein Gehäuseunterteil 118b aufweist. In dem in Fig. 9 dargestellten und insoweit bevorzugten Ausführungsbeispiel verläuft die Trennung zwischen dem Gehäuseoberteil 118a und dem Gehäuseunterteil 118b im Wesentlichen in einer horizontalen Ebene. Dies spielt für die noch zu erläuternde Lagerung der Seiltrommel 109 eine besondere Rolle. Eine derartige Ausgestaltung der Trennung zwischen dem Gehäuseoberteil 118a und dem Gehäuseunterteil 118b ist aber auch insoweit vorteilhaft, als die resultierende Trennlinie seitlich und nicht oberhalb bzw. unterhalb des Gehäuses 118 angeordnet ist. Dies ist beispielsweise im Hinblick auf die Vermeidung von Feuchtigkeitseintritt vorteilhaft.

In besonders bevorzugter Ausgestaltung ist das Gehäuse 118 bis auf die notwendigen Durchbrechungen für das Antriebsseil 107 oder dergleichen geschlossen ausgestaltet. Dies ist in Fig. 7 zu erkennen. Weitere notwendige Durchbrechungen sind beispielsweise für die noch zu erläuternde Antriebsverbindung zwischen dem Koppelelement 14 und der Seiltrommel 109 vorzusehen. Insgesamt erreicht man durch die im Wesentlichen geschlossene Ausgestaltung des Gehäuses 118 eine besonders schmutzresistente und damit robuste Konstruktion.

Die Seiltrommel 109 ist vorzugsweise im Gehäuse 118 des Rollenwagens 102 angeordnet, wobei zur Lagerung der Seiltrommel 109 die Seiltrommel 109 mit dem Gehäuse 118 des Rollenwagens 102 unter Zwischenschaltung von Lagerelementen 119 abschnittsweise formschlüssig in Eingriff steht. Auf die Lagerelemente 119 kann gegebenenfalls verzichtet werden, falls die Seiltrommel 109 selbst eine entsprechende Lagerung aufweist. Die in Fig. 10 dargestellte und insoweit bevorzugte Ausgestaltung, bei der im oberen und unteren Bereich entsprechende Lagerelemente 119 vorgesehen sind, ist jedoch besonders einfach zu realisieren. Das Gehäuse 118 wird gewissermaßen zweifach, nämlich als Gehäuse im ursprünglichen Sinne und als Lagerschale oder dergleichen genutzt.

Es lässt sich Fig. 10 ferner entnehmen, das die Seiltrommel 109 axial zwischen dem Gehäuseoberteil 118a und dem Gehäuseunterteil 118b unter Zwischenschaltung der bereits genannten Lagerelemente 119 gelagert ist. Hier zeigt sich der besondere Vorteil der horizontalen Trennung des Gehäuses 118. Damit ist nämlich ein besonders einfacher Zusammenbau des Rollenwagens 102 gewährleistet.

Es sind verschiedene Varianten denkbar, wie der Rollenwagen 102 an der Schiebetür 1 angeordnet ist. Besonders vorteilhaft ist die in Fig. 7 dargestellte Variante, bei der im Türblech eine Tasche 120 ausgebildet ist, wobei der Rollenwagen 102 zumindest zum Teil in der Tasche 120 angeordnet und befestigt ist. Dies führt dazu, dass der Rollenwagen 102 so weit wie möglich verdeckt und gleichzeitig geschützt ist.

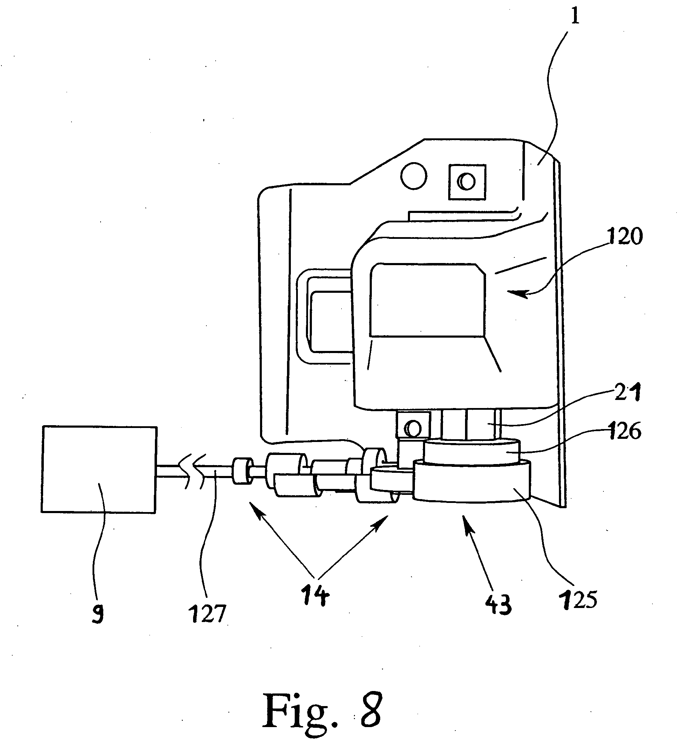

Fig. 8 zeigt die obige Tasche 120 von der Rückseite. Das dort dargestellte Koppelelement 14 ist außerhalb der Tasche 120 und ferner unterhalb der Tasche 120 angeordnet, wobei die Tasche 120 eine Ausnehmung für die Durchführung der Antriebsverbindung zwischen dem Koppelelement 14 und der Seiltrommel 109 aufweist.

Die Darstellung gemäß Fig. 9 zeigt, dass die Seiltrommel 109 über eine Antriebswelle 121 antreibbar ist. Dabei ist die Seiltrommel 109 starr mit der Antriebswelle 121 verbunden. Grundsätzlich kann es auch vorgesehen sein, dass hier ein Freilauf, eine Kupplung oder dergleichen zwischen der Antriebswelle 121 und der Seiltrommel 109 angeordnet ist. Der Darstellung gemäß den Fig. 7,8 ist ferner zu entnehmen, dass das Koppelelement 14 eine Abtriebswelle 21 aufweist und dass die Antriebswelle 121 und die Abtriebswelle 21 über eine Antriebsschnittstelle im montierten Zustand miteinander gekoppelt sind. Dabei sind die Antriebswelle 121 und die Abtriebswelle 21 vorzugsweise koaxial zueinander angeordnet.

Für die Montage einerseits und eine gegebenenfalls durchzuführende Reparatur andererseits ist es besonders vorteilhaft, wenn die Antriebsschnittstelle zwischen der Antriebswelle 121 und der Abtriebswelle 21 als lösbare Schnittstelle ausgestaltet ist. Dann können nämlich die Komponenten Rollenwagen 102 einerseits und Antrieb mit Koppelelement 14 andererseits getrennt voneinander vormontiert werden und erst bei der Endmontage zusammengeführt werden. Dies ist insofern sinnvoll, als der Zulieferer des Rollenwagens 102 oftmals ein anderer ist als der Zulieferer des Antriebs 8.

In besonders robuster und gleichzeitig einfacher Ausgestaltung stellt die Antriebsschnittstelle eine formschlüssige Kopplung zwischen der Antriebswelle 121 und der Abtriebswelle 21 her. Der Formschluss lässt sich beispielsweise über eine Torxkontur, eine Kerbverzahnung, eine Polygonverzahnung oder dergleichen herstellen. Dabei ist es in der Regel so, dass die Antriebswelle 121 und die Abtriebswelle 21 ineinander schiebbar sind.

Bei dem in Fig. 10 dargestellten und insoweit bevorzugten Ausführungsbeispiel ist die Antriebswelle 121 als Hohlwelle ausgestaltet, die formschlüssig mit der Seiltrommel 109 gekoppelt ist. Die Antriebswelle 121 ist koaxial zu der Seiltrommel 109, also zur Drehachse 117 der Seiltrommel 109 angeordnet. Eine besonders kostengünstige Variante lässt sich dadurch erzielen, dass die Seiltrommel 109 und die Hohlwelle - Antriebswelle 121 - einstückig ausgebildet sind. Dies gilt natürlich generell und nicht nur dann, wenn die Antriebswelle 121 als Hohlwelle ausgestaltet ist.

Bei dem in Fig. 7 dargestellten Ausführungsbeispiel ist die Anordnung so getroffen, dass durch die lösbare Ausgestaltung der Antriebsschnittstelle das Koppelelement 14 bei montiertem Rollenwagen 102 demontiert bzw. austauschbar ist. Umgekehrt ist der Rollenwagen 102 bei montiertem Koppelelement 14 demontierbar bzw. austauschbar. Dadurch lassen sich weitgehend beliebige Montagereihenfolgen realisieren. Ferner ist eine gegebenenfalls durchzuführende Reparatur auf einfache Weise möglich.

Die Darstellung gemäß Fig. 7 zeigt besonders deutlich, dass der Rollenwagen 102 lediglich auf die Abtriebswelle 21 des Antriebs 8 aufgesetzt werden muss, um die gewünschte Antriebsverbindung herzustellen. Die Antriebswelle 121 ist hier mit einer Polygonverzahnung ausgestattet.

Eine mögliche Montagereihenfolge könnte hier darin bestehen, zunächst das Koppelelement 14 zu montieren, so dass die in Fig. 7 dargestellte Situation vorliegt. Anschließend könnte der Rollenwagen 102 gegebenenfalls unter vorherigem "Einfädeln" des Antriebsseils 107, auf die Abtriebswelle 21 des Antriebs 8 aufgesetzt und entsprechend angeschraubt werden. Das Einhängen der Schiebetür 1 erfolgt dann nach der Montage des Rollenwagens 102 am Türblech der Schiebetür 1. Anschließend werden die Enden 110a,111a der Antriebsseilstränge an der Karosserie befestigt. Hier sind verschiedene andere Montagereihenfolgen realisierbar.

Für die Ausgestaltung des Antriebs 8 sind zahlreiche Möglichkeiten denkbar. Eine besonders bevorzugte Ausgestaltung zeigt die Darstellung gemäß Fig. 8. Hier weist das Koppelelement 14 einen Antriebsmotor 9 und ein nachgeschaltetes Getriebe 43 auf, wobei die oben angesprochene Abtriebswelle 21 des Antriebs 8 die Abtriebswelle des Getriebes 43 ist.

Im dargestellten und insoweit bevorzugten Ausführungsbeispiel weist das Getriebe 43 eine Planetenradgetriebestufe 125 und eine Stirnradgetriebestufe 126 auf. Solche Getriebestufen lassen sich weitgehend beliebig je nach aktueller Randbedingung kombinieren.

Die in Fig. 8 dargestellte Ausgestaltung ist insofern besonders vorteilhaft, als der Antriebsmotor 9 mit dem Getriebe 43 über eine biegsame Welle 127 gekoppelt ist. Damit lässt sich der Antriebsmotor 9 dort positionieren, wo entsprechender Bauraum vorhanden ist.

Das in Fig. 7 dargestellte Ausführungsbeispiel ist insofern vorteilhaft, als es zusätzlich eine einfache Höhenverstellung der Schiebetür 1 relativ zum Kraftfahrzeug im Übrigen bereitstellt. Dabei ist es vorgesehen, dass sich die Schiebetür 1 in vertikaler Richtung über den Rollenwagen 102 und die Laufrollenanordnung 103 an der Führungsschiene 20 abstützt und dass der Rollenwagen 102 relativ zur Schiebetür 1 in vertikaler Richtung verstellbar ist. Dies ist insofern unproblematisch, als der Rollenwagen 102 über einen Haltewinkel 128 an der Schiebetür 1 schwenkbar angeordnet ist. Die Schwenkachse bildet hier ein Bolzen 129, der ein Außengewinde aufweist. Auf den Bolzen 129 sind Muttern 130 aufgeschraubt, über die sich die Schiebetür 1 wie beschrieben in vertikaler Richtung abstützt, Mit dieser Konstruktion lässt sich eine Höhenverstellung durch eine entsprechende Verstellung der Muttern 130 auf dem Bolzen 129 erreichen.

Nach einer weiteren Lehre, der eigenständige Bedeutung zukommt, wird die Schiebetürkinematik der oben beschriebenen Schiebetüranordnung beansprucht. Die Schiebetürkinematik weist den Rollenwagen 102 sowie die Antriebsanordnung 106 der oben beschriebenen Schiebetüranordnung auf. Auf die obigen Ausführungen darf verwiesen werden.

Es lässt sich zusammenfassen, dass durch die oben beschriebene Anordnung der Seiltrommel 109 am oder im Rollenwagen 102 eine Reduzierung der Bauteile, des benötigten Bauraums und des resultierenden Gewichts erreichbar ist, was auch zu geringen Kosten führt. Gleichzeitig ist die Montage sowie eine gegebenenfalls durchzuführende Reparatur vereinfacht. Ferner ist durch die einfache Seilführung die Kraftübertragung durch Reduzierung von Reibungsverlusten optimiert. Die Optimierung der Kraftübertragung ist wiederum mit einer Reduzierung der Betriebsgeräusche verbunden. Schließlich führt die oben beschriebene Ausgestaltung des Gehäuses 118 zu einem einfachen konstruktiven Aufbau und zu einer hohen Robustheit gegenüber ungünstigen Umwelteinflüssen, wie Schmutz oder Feuchtigkeit.

### Bezugszeichenliste

- 1: Schiebetür
- 3: Systemeinheit
- 5: Montageplatz Antrieb Fensterheber
- 6: Montageplatz Lautsprecher
- 7: Schiebetürantrieb
- 9: Antriebsmotor
- 10: Steuereinheit
- 12: Trockenseite
- 13: Nassseite
- 14: Koppelelement
- 15: Koppelglied
- 18: Schiebemechanik
- 20: Führungsschiene
- 21: Hohlelement
- 23: Halteelement
- 24: Bohrung
- 25: Bohrung
- 27: Innenachtkant
- 28: Befestigungswinkel
- 29: Rollenmechanik
- 31: Seilzug
- 32: erstes Seil
- 33: zweites Seil
- 35: erste Rolle
- 36: zweite Rolle
- 37: Rollen
- 38: Stützrolle
- 40: Abtriebswelle
- 41: Durchführung
- 43: Getriebemechanik
- 44: Achtkant
- 46: Schlosshaltewinkel
- 47: Befestigungsschrauben
- 48: Schloss
- 49: Zuleitung
- 50: Nassraumsteckverbindung
- 52: Kabelführung
- 102: Rollenwagen
- 103: Laufrollenanordnung
- 105: weitere Führungsschiene
- 106: Antriebsanordnung
- 107: Antriebsseil
- 109: Seiltrommel
- 110: Antriebsseilstrang
- 111: Antriebsseilstrang
- 110a: Ende Antriebsseilstrang
- 111a: Ende Antriebsseilstrang
- 112: Umlenkvorrichtung
- 113: Umlenkrolle
- 114: Umlenkrolle
- 115: Umlenkkontur
- 116: Umlenkkontur
- 117: Drehachse (Seiltrommel)
- 118: Gehäuse (der Rollenmechanik)
- 118a: Gehäuseoberteil
- 118b: Gehäuseunterteil
- 119: Lagerelemente
- 120: Tasche
- 121: Antriebswelle
- 125: Planetenradgetriebestufe
- 126: Stirnradgetriebestufe
- 127: biegsame Welle
- 128: Haltewinkel
- 129: Bolzen
- 130: Mutter

## Patentansprüche

1. Schiebetür (1), insbesondere für ein Kraftfahrzeug, mit einer vorgefertigten Systemeinheit (3), die eine Anzahl von Funktionsbaugruppen umfasst, wobei auf der Systemeinheit (3) als eine Funktionsbaugruppe ein Schiebetürantrieb (7) angeordnet ist, der einen Antriebsmotor (9) und ein vom Antriebsmotor (9) angetriebenes Koppelelement (14) umfasst, welches zu einer lösbaren Kopplung mit einer externen Verstellmechanik (18) ausgebildet ist.

2. Schiebetür (1) nach Anspruch 1,
wobei eine vom Antriebsmotor (9) getriebene Abtriebswelle (40) umfasst ist, die mit dem Koppelelement (14) verbunden ist.

3. Schiebetür (1) nach Anspruch 1 oder 2,
wobei das Koppelelement (14) eine Getriebemechanik (43) umfasst.

4. Schiebetür (1) nach einem der vorhergehenden Ansprüche,
wobei das Koppelelement (14) als Koppelglied (15) eine Profilwelle umfasst.

5. Schiebetür (1) nach einem der vorhergehenden Ansprüche,
wobei der Schiebetürantrieb (7) eine insbesondere auf der Trockenseite (12) angeordnete Steuereinheit (10) umfasst.

6. Schiebetür (1) nach einem der Ansprüche 2 bis 5,
wobei das Koppelelement (14) auf der Nassseite (13) und der Antriebsmotor (9) auf der Trockenseite (12) angeordnet ist, und wobei die Abtriebswelle (40) flexibel ausgestaltet ist und von der Trockenseite (12) über eine abgedichtete Durchführung (41) auf die Nassseite (13) geführt ist.

7. Schiebetür (1) nach einem der vorhergehenden Ansprüche,
wobei das Koppelelement (14) auf einem insbesondere schiebebeweglichen Haltewinkel aus einem elastisch biegbaren Material montiert ist.

8. Schiebetür (1) nach Anspruch 7,
wobei der Haltewinkel ein Schlosshaltewinkel (46) ist.

9. Schiebetür (1) nach Anspruch 7 oder 8,
wobei auf dem Haltewinkel eine weitere Baugruppe, insbesondere eine Nassraumsteckverbindung (50) oder eine Kabelführung (52), montiert ist.

10. Schiebetür (1) nach einem der vorherigen Ansprüche,
mit einer angebundenen Verstellmechanik (18), umfassend einen Rollenwagen (102) mit einer Laufrollenanordnung (3) zur Führung der Schiebetür (1) in einer Führungsschiene (20) an der Karosserie des Kraftfahrzeugs, und mit einer über das Koppelelement (14) vom Antriebsmotor (9) antreibbaren Antriebsanordnung (106) zur motorischen Verstellung der Schiebetür (1), wobei der Antriebsstrang der Antriebsanordnung (106) über ein Antriebsseil (107) führt, wobei jedenfalls ein Ende des Antriebsseils (107) mit der Karosserie des Kraftfahrzeugs verbunden ist und wobei die Antriebsanordnung (106) in der Schiebetür (1) eine mit dem Antriebsmotor (9) über das Koppelelement (war Antrieb 8) gekoppelte Seiltrommel (109) zur Übertragung von Antriebskraft auf das Antriebsseil (107) aufweist,
**dadurch gekennzeichnet,**
**dass** die Seiltrommel (109) der Antriebsanordnung (106) am oder im Rollenwagen (102) angeordnet ist.

11. Schiebetür nach Anspruch 10,
**dadurch gekennzeichnet,**
**dass** von der Seiltrommel (109) zwei Antriebsseilstränge (10,11) abgehen und dass das Ende (110a) des einen Antriebsseilstrangs (110) mit einem vorderen Abschnitt des Karosserie des Kraftfahrzeugs verbunden ist und dass das Ende (111 a) des anderen Antriebsseilstrangs (111) mit einem hinteren Abschnitt der Karosserie des Kraftfahrzeugs verbunden ist.

12. Schiebetür nach Anspruch 11,
**dadurch gekennzeichnet,**
**dass** eine Umlenkvorrichtung (112) für die von der Seiltrommel (109) abgehenden Antriebsseilstränge (10,11) vorgesehen ist, dass die Umlenkvorrichtung (112) eine Positionierung der Antriebsseilstränge (10,11) im Wesentlichen innerhalb der Führungsschiene (20) oder in unmittelbarer Nähe der Führungsschiene (20) gewährleistet und dass die Umlenkvorrichtung (112) am oder im Rollenwagen (102) angeordnet ist.

13. Schiebetür nach Anspruch 11 oder 12,
**dadurch gekennzeichnet,**
**dass** die Umlenkvorrichtung (112) für die beiden Antriebsseilstränge (10,11) jeweils eine am Rollenwagen (102) gelagerte Umlenkrolle (13,14) aufweist oder dass die Umlenkvorrichtung (112) für die beiden Antriebsseilstränge (10,11) jeweils eine Umlenkkontur (15,16) aufweist, die integraler Bestandteil des Rollenwagens (102) ist.

14. Schiebetür nach einem der Ansprüche 10 bis 13,
**dadurch gekennzeichnet,**
**dass** die Drehachse (117) der Seiltrommel (109) im Wesentlichen vertikal ausgerichtet ist.

15. Schiebetür nach einem Ansprüche 10 bis 14,
**dadurch gekennzeichnet,**
**dass** der Rollenwagen (102) ein zweigeteiltes Gehäuse (118) mit einem Gehäuseoberteil (118a) und einem Gehäuseunterteil (118b) aufweist, insbesondere dass die Trennung zwischen dem Gehäuseoberteil (118a) und dem Gehäuseunterteil (118b) im Wesentlichen in einer horizontalen Ebene verläuft.

16. Schiebetür nach Anspruch 15,
**dadurch gekennzeichnet,**
**dass** das Gehäuse (118) bis auf die notwendigen Durchbrechungen für das Antriebsseil (107) geschlossen ausgestaltet ist.

17. Schiebetür nach einem der Ansprüche 10 bis 16,
**dadurch gekennzeichnet,**
**dass** die Seiltrommel (109) im Gehäuse (118) des Rollenwagens (102) angeordnet ist, und dass zur Lagerung der Seiltrommel (109) die Seiltrommel (109) mit dem Gehäuse (118) des Rollenwagens (102) gegebenenfalls unter Zwischenschaltung von Lagerelementen (119) zumindest abschnittsweise formschlüssig in Eingriff steht.

18. Schiebetür nach einem der Ansprüche 15 bis 17,
**dadurch gekennzeichnet,**
**dass** die Seiltrommel (109) axial zwischen dem Gehäuseoberteil (118a) und dem Gehäuseunterteil (118b) gegebenenfalls unter Zwischenschaltung von Lagerelementen (119) gelagert ist.

19. Schiebetür nach einem der Ansprüche 10 bis 18,
**dadurch gekennzeichnet,**
**dass** im Türblech eine Tasche (120) ausgebildet ist und dass der Rollenwagen (102) zumindest zum Teil in der Tasche (120) angeordnet ist.

20. Schiebetür nach Anspruch 19,
**dadurch gekennzeichnet,**
**dass** das Koppelelement (14) außerhalb, vorzugsweise unterhalb der Tasche (120) angeordnet ist und dass die Tasche (120) eine Ausnehmung für die Durchführung der Antriebsverbindung zwischen dem Koppelelement (14) und der Seiltrommel (109) aufweist.

21. Schiebetür nach einem der Ansprüche 10 bis 20,
**dadurch gekennzeichnet,**
**dass** die Seiltrommel (109) über eine Antriebswelle (121) antreibbar ist, insbesondere starr mit der Antriebswelle (121) verbunden ist, dass das Koppelelement (14) eine Abtriebswelle (21) umfasst, und dass die Antriebswelle (121) und die Abtriebswelle (21) über das Koppelglied (15) miteinander gekoppelt sind, insbesondere dass die Antriebswelle (121) und die Abtriebswelle (21) koaxial zueinander angeordnet sind.

22. Schiebetür nach Anspruch 21,
**dadurch gekennzeichnet,**
**dass** das Koppelglied (15) als Profilwelle zur formschlüssigen Kopplung zwischen der Abtriebswelle und der Antriebswelle ausgebildet ist, wobei der Formschluss über eine Torxkontur, eine Kerbverzahnung, eine Polygonverzahnung oder dergleichen hergestellt ist, weiter vorzugsweise dass die Antriebswelle (121) und die Abtriebswelle (21) ineinander schiebbar sind.

23. Schiebetür nach einem der Ansprüche 10 bis 22,
**dadurch gekennzeichnet,**
**dass** die Antriebswelle (121) als Hohlwelle ausgestaltet ist, die formschlüssig mit der Seiltrommel (109) gekoppelt ist und koaxial zu der Seiltrommel (109) angeordnet ist, vorzugsweise dass die Seiltrommel (109) und die Hohlwelle einstückig ausgebildet sind.

24. Schiebetür nach einem der Ansprüche 10 bis 23,
**dadurch gekennzeichnet,**
**dass** das Koppelelement derart ausgestaltet ist, dass der Antriebsmotor bei montiertem Rollenwagen (102) demontierbar bzw. austauschbar ist und/oder der Rollenwagen (102) bei montiertem Antriebsmotor demontierbar bzw. austauschbar ist.

25. Schiebetür nach einem der Ansprüche 3 bis 24,
**dadurch gekennzeichnet,**
**dass** die Getriebemechanik (43) eine Planetenradgetriebestufe und/oder eine Stirnradgetriebestufe aufweist.

26. Schiebetür nach einem der vorhergehenden Ansprüche,
**dadurch gekennzeichnet,**
**dass** sich diese in vertikaler Richtung über den Rollenwagen (102) und die Laufrollenanordnung (103) an der Führungsschiene (20) abstützt und dass der Rollenwagen (102) relativ zur Schiebetür (1) in vertikaler Richtung verstellbar ist.

27. Schiebetürkinematik einer Schiebetür für ein Kraftfahrzeug, wobei die Schiebetür eine Schiebetür (1) aufweist, wobei die Schiebetür (1) durch eine Schiebebewegung in eine geöffnete Stellung und in eine geschlossene Stellung verstellbar ist, wobei die Schiebetürkinematik einen im montierten Zustand an der Schiebetür (1) angeordneten Rollenwagen (102) mit einer Laufrollenanordnung (103) aufweist, wobei die Schiebetür (1) im montierten Zustand über die Laufrollenanordnung (103) in einer Führungsschiene (20) an der Karosserie des Kraftfahrzeugs geführt ist, wobei der Rollenwagen (102) als vormontierbare Einheit ausgestaltet ist, wobei die Schiebetürkinematik einen Antriebsanordnung (106) zur motorischen Verstellung der Schiebetür (1) in die geöffnete Stellung und in die geschlossene Stellung aufweist, wobei der Antriebsstrang der Antriebsanordnung (106) im montierten Zustand über ein Antriebsseil (107) führt, wobei jedenfalls ein Ende des Antriebsseils (107) im montierten Zustand mit der Karosserie des Kraftfahrzeugs verbunden ist und wobei die Antriebsanordnung (106) ein Koppelglied und eine mit dem Koppelglied (15) gekoppelte Seiltrommel (109) zur Übertragung von Antriebskraft auf das Antriebsseil (107) aufweist,
**gekennzeichnet durch**
die Merkmale des kennzeichnenden Teils eines oder mehrerer der vorhergehenden Ansprüche 10 bis 26.

## Claims

1. A sliding door (1), in particular for a motor vehicle, comprising a prefabricated system unit (3) which includes a number of functional assemblies, a sliding door drive (7) being disposed on the system unit (3) as a functional assembly, the sliding door drive including a drive motor (9) and a coupling element (14) driven by the drive motor (9), the coupling element forming a detachable coupling having an external displacement mechanism (18).

2. The sliding door (1) according to Claim 1,
wherein an output shaft (40) driven by the drive motor (9) is included, which is connected to the coupling element (14).

3. The sliding door (1) according to Claim 1 or 2,
wherein the coupling element (14) includes a gear mechanism (43).

4. The sliding door (1) according to one of the preceding claims,
wherein the coupling element (14) includes a profiled shaft as the coupling link (15).

5. The sliding door (1) according to one of the preceding claims,
wherein the sliding door drive (7) includes a control unit (10) disposed, in particular, on the dry side (12).

6. The sliding door (1) according to one of Claims 2 through 5,
wherein the coupling element (14) is disposed on the wet side (13) and the drive motor (9) is disposed on the dry side (12), and wherein the output shaft (40) has a flexible design and is routed from the dry side (12) to the wet side (13) though a sealed passage (41).

7. The sliding door (1) according to one of the preceding claims,
wherein the coupling element (14) is mounted, in particular, on a slidable holding bracket made of an elastically bendable material.

8. The sliding door (1) according to Claim 7,
wherein the holding bracket is a lock holding bracket (46).

9. The sliding door (1) according to Claim 7 or 8,
wherein a further assembly, in particular a wet-environment plug connector (50) or a cable conduit (52), is mounted on the holding bracket.

10. The sliding door (1) according to one of the preceding claims,
comprising a connected displacement mechanism (18), including a roller carriage (102) having a roller arrangement (3) for guiding the sliding door (1) in a guide rail (20) on the motor vehicle body, and comprising drive arrangement (106) which is drivable by the drive motor (9) via the coupling element (14) for the motorized displacement of the sliding door (1), the drive train of the drive arrangement (106) passing over a drive cable (107), one end of the drive cable (107) being connected in any case to the motor vehicle body, and the drive arrangement (106) in the sliding door (1) having a cable drum (109) coupled with the drive motor (9) via the coupling element (was drive 8) for transmitting driving force to the drive cable (107),
**characterized in that**
the cable drum (109) of the drive arrangement (106) is disposed on or in the roller carriage (102).

11. The sliding door according to Claim 10,
**characterized in that**
two drive cable strands (10, 11 [sic; 110, 111]) unwind from the cable drum (109), and the end (110a) of the one drive cable strand (110) is connected to a front section of the motor vehicle body and the end (111a) of the other drive cable strand (111) is connected to a rear section of the motor vehicle body.

12. The sliding door according to Claim 11,
**characterized in that**
a deflection device (112) is provided for the drive cable strands (10, 11 [sic; 110, 111]) unwinding from the cable drum (109), the deflection device (112) ensures that the drive cable strands (10, 11 [sic; 110, 111]) are positioned largely within the guide rail (20) or in the direct vicinity of the guide rail (20), and the deflection device (112) is disposed on or in the roller carriage (102).

13. The sliding door according to Claim 11 or 12,
**characterized in that**
the deflection device (112) for the two drive cable strands (10, 11 [sic; 110, 111]) has deflection rollers (13, 14) mounted on the roller carriage (102) or the deflection device (112) has a deflection contour (15, 16) for each of the two drive cable strands (10, 11 [sic; 110, 111]), which is an integral part of the roller carriage (102).

14. The sliding door according to one of Claims 10 through 13,
**characterized in that**
the rotary axis (117) of the cable drum (109) is largely oriented in the vertical direction.

15. The sliding door according to one of Claims 10 through 14,
**characterized in that**
the roller carriage (102) includes a two-part housing (118) having an upper housing part (118a) and a lower housing part (118b); in particular, the separation between the upper housing part (118a) and the lower housing part (118b) runs largely on a horizontal plane.

16. The sliding door according to Claim 15,
**characterized in that**
the housing (118) is provided with a closed design, except for the necessary openings for the drive cable (107).

17. The sliding door according to one of Claims 10 through 16,
**characterized in that**
the cable drum (109) is disposed in the housing (118) of the roller carriage (102), and the cable drum (109) is in positive engagement at least in sections with the housing (118) of the roller carriage (102) for mounting the cable drum (109), if necessary by interposing bearing elements (119).

18. The sliding door according to one of Claims 15 through 17,
**characterized in that**
the cable drum (109) is mounted between the upper housing part (118a) and the lower housing part (118b) in the axial direction, if necessary by interposing bearing elements (119).

19. The sliding door according to one of Claims 10 through 18,
**characterized in that**
a pocket (120) is provided in the door panel, and the roller carriage (102) is at least partially disposed in the pocket (120).

20. The sliding door according to Claim 19,
**characterized in that**
the coupling element (14) is disposed outside, preferably below, the pocket (120), and the pocket (120) has a recess for inserting the drive connection between the coupling element (14) and the cable drum (109).

21. The sliding door according to one of Claims 10 through 20,
**characterized in that**
the cable drum (109) is drivable via a drive shaft (121) and is connected in particular rigidly to the drive shaft (121), the coupling element (14) includes an output shaft (21), and the drive shaft (121) and the output shaft (21) are coupled with each other via the coupling link (15), in particular the drive shaft (121) and the output shaft (21) are disposed coaxially to each other.

22. The sliding door according to Claim 21,
**characterized in that**
the coupling link (15) is designed as a profiled shaft for positive coupling between the output shaft and the drive shaft, the positive fit being established via a Torx profile, a groove toothing, a polygonal toothing or the like, and the drive shaft (121) and the output shaft (21) may further preferably slide into each other.

23. The sliding door according to one of Claims 10 through 22,
**characterized in that**
the output shaft (121) is designed as a hollow shaft which is positively coupled with the cable drum (109) and is disposed coaxially to the cable drum (109), and the cable drum (109) and the hollow shaft are preferably designed as a single unit.

24. The sliding door according to one of the preceding claims,
**characterized in that**
the coupling element is designed in such a way that the drive motor may be disassembled or replaced while the roller carriage (102) is in the mounted state and/or the roller carriage (102) may be disassembled or replaced while the drive motor is in the mounted state.

25. The sliding door according to one of Claims 3 through 24,
**characterized in that**
the gear mechanism (43) is a planetary wheel gear and/or a cylindrical gear.

26. The sliding door according to one of the preceding claims,
**characterized in that**
the sliding door is supported in the vertical direction on the guide rail (20) via the roller carriage (102) and the roller arrangement (103), and the roller carriage (102) is displaceable in the vertical direction relative to sliding door (1).

27. Sliding door kinematics of a sliding door for a motor vehicle, the sliding door having a sliding door (1), the sliding door (1) being displaceable by a sliding motion into an open position and into a closed position, the sliding door kinematics including a roller carriage (102) having a roller arrangement (103) disposed on the sliding door (1) in the mounted state, the sliding door (1) being guided on the motor vehicle body in a guide rail (20) via the roller arrangement (103) in the mounted state, the roller carriage (102) being designed as a premountable unit, the sliding door kinematics having a drive arrangement (106) for the motorized displacement of the sliding door (1) into the open position and into the closed position, the drive train of the drive arrangement (106) passing over a drive cable (107) in the mounted state, one end of the drive cable (107) being connected in any case to the motor vehicle body in the mounted state, and the drive arrangement (106) having a coupling link (15) and a cable drum (109) coupled with the coupling link (15) for transmitting driving force to the drive cable (107),
**characterized by**
the features of the characterizing portion of one or more of the preceding Claims 10 through 26.

## Revendications

1. Portière ou porte coulissante (1), notamment pour un véhicule automobile, comprenant une unité de système ou un module de portière préfabriqué (3), qui englobe un certain nombre de sous-groupes fonctionnels,
dans laquelle sur le module de portière (3) est agencé, en tant qu'un des sous-groupes fonctionnels, un système d'entraînement de portière coulissante (7) comprenant un moteur d'entraînement (9) ainsi qu'un élément de couplage (14) entraîné par le moteur d'entraînement (9) et réalisé pour permettre un couplage amovible avec une mécanique de déplacement (18) externe.

2. Portière coulissante (1) selon la revendication 1,
dans laquelle est prévu un arbre de sortie d'entraînement (40) entraîné par le moteur d'entraînement (9) et relié à l'élément de couplage (14).

3. Portière coulissante (1) selon la revendication 1 ou la revendication 2,
dans laquelle l'élément de couplage (14) comprend une mécanique de transmission (43).

4. Portière coulissante (1) selon l'une des revendications précédentes,
dans laquelle l'élément de couplage (14) comprend un arbre profilé en guise d'organe de couplage (15).

5. Portière coulissante (1) selon l'une des revendications précédentes,
dans laquelle le système d'entraînement de portière coulissante (7) comprend une unité de commande (10) notamment agencée sur le côté sec (12).

6. Portière coulissante (1) selon l'une des revendications 2 à 5,
dans laquelle l'élément de couplage (14) est agencé sur le côté humide (13) et le moteur d'entraînement (9) sur le côté sec (12), et dans laquelle l'arbre de sortie d'entraînement (40) est d'une configuration flexible et est mené et guidé à partir du côté sec (12) vers le côté humide (13), par l'intermédiaire d'une traversée étanche (41).

7. Portière coulissante (1) selon l'une des revendications précédentes,
dans laquelle l'élément de couplage (14) est monté sur une cornière de support notamment mobile en coulissement et réalisée en un matériau élastiquement flexible.

8. Portière coulissante (1) selon la revendication 7,
dans laquelle la cornière de support est une cornière de support de serrure (46).

9. Portière coulissante (1) selon la revendication 7 ou la revendication 8,
dans laquelle sur la cornière de support est monté un autre sous-groupe, notamment un connecteur de liaison (50) pour espaces humides ou un guide-câble (52).

10. Portière coulissante (1) selon l'une des revendications précédentes,
comprenant une mécanique de déplacement (18) qui y est rattachée et comporte un chariot de roulement (102) avec un agencement de galets de roulement (103) pour le guidage de la portière coulissante (1) dans un rail de guidage (20) sur la carrosserie du véhicule automobile, et comprenant également un agencement d'entraînement (106), qui peut être entraîné par le moteur d'entraînement (9) par l'intermédiaire de l'élément de couplage (14) en vue du déplacement motorisé de la portière coulissante (1), la ligne de transmission d'entraînement de l'agencement d'entraînement (106) passant par un câble d'entraînement (107), une extrémité du câble d'entraînement (107) étant dans tous les cas reliée à la carrosserie du véhicule automobile, et l'agencement d'entraînement (106) présentant, dans la portière coulissante (1), un tambour à câble (109) couplé au moteur d'entraînement (9) par l'intermédiaire de l'élément de couplage (était l'entraînement 8) pour la transmission de la force d'entraînement au câble d'entraînement (107),
**caractérisée**
**en ce que** le tambour à câble (109) de l'agencement d'entraînement (106) est disposé sur ou dans le chariot de roulement (102).

11. Portière coulissante selon la revendication 10,
**caractérisée**
**en ce que** du tambour à câble (109) partent deux brins de câble d'entraînement (10, 11), et en ce que l'extrémité (110a) de l'un (110) des brins de câble d'entraînement est reliée à une partie avant de la carrosserie du véhicule automobile, et en ce que l'extrémité (111a) de l'autre brin de câble d'entraînement (111) est reliée à une partie arrière de la carrosserie du véhicule automobile.

12. Portière coulissante selon la revendication 11,
**caractérisée**
**en ce qu'**il est prévu un dispositif de renvoi (112) pour les brins de câble d'entraînement (10, 11) partant du tambour à câble (109), en ce que le dispositif de renvoi (112) assure un positionnement des brins de câble d'entraînement (10, 11) sensiblement à l'intérieur du rail de guidage (20) ou à proximité directe du rail de guidage (20), et en ce que le dispositif de renvoi (112) est agencé sur ou dans le chariot de roulement (102).

13. Portière coulissante selon la revendication 11 ou la revendication 12,
**caractérisée**
**en ce que** le dispositif de renvoi (112) comporte pour les deux brins de câble d'entraînement (10, 11) respectivement un galet de renvoi (13, 14) monté sur le chariot de roulement (102), ou bien en ce que le dispositif de renvoi (112) comporte pour les deux brins de câble d'entraînement (10, 11) respectivement un contour de renvoi (15, 16), qui fait partie intégrante du chariot de roulement (102).

14. Portière coulissante selon l'une des revendications 10 à 13,
**caractérisée**
**en ce que** l'axe de rotation (117) du tambour à câble (109) est d'une orientation sensiblement verticale.

15. Portière coulissante selon l'une des revendications 10 à 14,
**caractérisée**
**en ce que** le chariot de roulement (102) présente un carter (118) subdivisé en deux et comprenant une partie supérieure de carter (118a) et une partie inférieure de carter (118b), et notamment en ce que la séparation entre la partie supérieure de carter (118a) et la partie inférieure de carter (118b) s'étend sensiblement dans un plan horizontal.

16. Portière coulissante selon la revendication 15,
**caractérisée**
**en ce que** le carter (118) est d'une configuration fermée exception faite des passages nécessaires au câble d'entraînement (107).

17. Portière coulissante selon l'une des revendications 10 à 16,
**caractérisée**
**en ce que** le tambour à câble (109) est agencé dans le carter (118) du chariot de roulement (102), et en ce que pour le montage du tambour à câble (109), le tambour à câble (109) se trouve, au moins par secteurs, en prise par complémentarité de formes avec le carter (118) du chariot de roulement (102), le cas échéant avec interposition d'éléments de palier (119).

18. Portière coulissante selon l'une des revendications 15 à 17,
**caractérisée**
**en ce que** le tambour à câble (109) est monté axialement entre la partie supérieure de carter (118a) et la partie inférieure de carter (118b), le cas échéant avec interposition d'éléments de palier (119).

19. Portière coulissante selon l'une des revendications 10 à 18,
**caractérisée**
**en ce que** dans la tôle de portière est formée une alvéole (120), et en ce que le chariot de roulement (102) est agencé, au moins en partie, dans l'alvéole (120).

20. Portière coulissante selon la revendication 19,
**caractérisée**
**en ce que** l'élément de couplage (14) est agencé à l'extérieur, de préférence en-dessous de l'alvéole (120), et en ce que l'alvéole (120) présente un évidement pour le passage de la liaison d'entraînement entre l'élément de couplage (14) et le tambour à câble (109).

21. Portière coulissante selon l'une des revendications 10 à 20,
**caractérisée**
**en ce que** le tambour à câble (109) peut être entraîné par l'intermédiaire d'un arbre d'entraînement (121), et est notamment lié de manière rigide à l'arbre d'entraînement (121), en ce que l'élément de couplage (14) présente un arbre de sortie d'entraînement (21), et en ce que l'arbre d'entraînement (121) et l'arbre de sortie d'entraînement (21) sont couplés l'un à l'autre par l'intermédiaire de l'organe de couplage (15), et notamment que l'arbre d'entraînement (121) et l'arbre de sortie d'entraînement (21) sont agencés coaxialement l'un à l'autre.

22. Portière coulissante selon la revendication 21,
**caractérisée**
**en ce que** l'organe de couplage (15) est réalisé sous forme d'arbre profilé pour assurer le couplage par complémentarité de formes entre l'arbre de sortie d'entraînement et l'arbre d'entraînement, la liaison par complémentarité de formes étant établie à l'aide d'un contour dit "Torx", d'une denture en forme de cannelures, d'une denture polygonale ou analogue, et par ailleurs en ce que l'arbre d'entraînement (121) et l'arbre de sortie d'entraînement (21) peuvent de préférence être emmanchés l'un dans l'autre par coulissement.

23. Portière coulissante selon l'une des revendications 10 à 22,
**caractérisée**
**en ce que** l'arbre d'entraînement (121) est réalisé en tant qu'arbre creux, qui est couplé par complémentarité de formes avec le tambour à câble (109) et est agencé coaxialement au tambour à câble (109), de préférence en ce que le tambour à câble (109) et l'arbre creux sont réalisés d'un seul tenant.

24. Portière coulissante selon l'une des revendications 10 à 23,
**caractérisée**
**en ce que** l'élément de couplage est conçu de façon telle que le moteur d'entraînement puisse être démonté et remplacé alors que le chariot de roulement (102) est monté, et/ou que le chariot de roulement (102) puisse être démonté ou remplacé alors que le moteur d'entraînement est monté.

25. Portière coulissante selon l'une des revendications 3 à 24,
**caractérisée**
**en ce que** la mécanique de transmission (43) présente un étage de transmission à train épicycloïdal et/ou un étage de transmission à roues droites.

26. Portière coulissante selon l'une des revendications précédentes,
**caractérisée**
**en ce que** celle-ci s'appuie, dans la direction verticale, sur le rail de guidage (20) par l'intermédiaire du chariot de roulement (102) et l'agencement de galets de roulement (103), et en ce que le chariot de roulement (102) est réglable, dans la direction verticale, par rapport à la portière coulissante (1).

27. Cinématique de portière coulissante d'une portière coulissante pour un véhicule automobile, dans laquelle la portière coulissante comprend une portière coulissante (1), la portière coulissante (1) pouvant être déplacée dans une position ouverte et dans une position fermée, la cinématique de portière coulissante englobant un chariot de roulement (102), qui comprend un agencement de galets de roulement (103) et est agencé sur la portière coulissante (1) dans l'état monté, la portière coulissante (1) étant, dans l'état monté, guidée par l'intermédiaire de l'agencement de galets de roulement (103) dans un rail de guidage (20) sur la carrosserie du véhicule automobile, le chariot de roulement (102) étant configuré sous la forme d'une unité pouvant être assemblée au préalable, la cinématique de portière coulissante présentant un agencement d'entraînement (106) pour le déplacement motorisé de la portière coulissante (1) dans la position ouverte et dans la position fermée, la ligne de transmission d'entraînement de l'agencement d'entraînement (106) passant, dans l'état monté, par un câble d'entraînement (107), une extrémité du câble d'entraînement (107) étant dans tous les cas reliée, dans l'état monté, à la carrosserie du véhicule automobile, et l'agencement d'entraînement (106) présentant, un organe de couplage et un tambour à câble (109) couplé à l'organe de couplage (15) pour la transmission de la force d'entraînement au câble d'entraînement (107),
**caractérisée**
**par** les particularités de la partie caractéristique de l'une ou plusieurs des revendications précédentes 10 à 26.
